# EUROPÄISCHE PATENTANMELDUNG

(11) **EP 4 212 375 A1**
(43) Veröffentlichungstag der Anmeldung: **19.07.2023**
(21) Anmeldenummer: 23151611.3
(22) Anmeldetag: 13.01.2023
(51) Int. Cl.: B60K 17/04, B60K 17/08, B60T 1/06, B62D 55/125, F16H 57/10, F16D 55/02, B60T 17/04

(54) **GETRIEBE FÜR EINEN ANTRIEBSSTRANG FÜR EIN LANDWIRTSCHAFTLICHES ODER SCHWERLAST-FAHRZEUG SOWIE ENTSPRECHENDER ANTRIEBSSTRANG UND ENTSPRECHENDES FAHRZEUG**

(30) Priorität: 14.01.2022 DE 202022100214 U
(71) Anmelder: Rögelberg Holding GmbH & Co. KG, 49716 Meppen (DE)
(72) Erfinder: SIEPKER, Hermann, 48499 Salzbergen (DE); KALVERKAMP, Felix, 49597 Rieste (DE)
(74) Vertreter: Wischmeyer, André

(57) **Zusammenfassung**

Die Erfindung betrifft ein Getriebe für einen Antriebsstrang für ein landwirtschaftliches oder Schwerlast-Fahrzeug, mit einer zentralen Antriebswelle, mit zumindest einer Planetenstufe umfassend einen Planetenträger, mit zumindest einem Abtriebselement und mit einer Bremseinrichtung, wobei die Antriebswelle über die Planetenstufe mit dem Abtriebselement verbunden ist, wobei die Bremseinrichtung dergestalt zwischen Planetenträger und dem als Hohlrad ausgebildeten Abtriebselement angeordnet ist, dass das Abtriebselement über die Bremseinrichtung mit dem Planetenträger koppelbar ist. Ferner betrifft die Erfindung einen Antriebsstrang umfassend insbesondere einen als Hydromotor oder Elektromotor ausgebildeten Motor sowie ein landwirtschaftliches oder Schwerlast-Fahrzeug

## Beschreibung

Aus der US 4,029,166 ist ein Gegenstand nach dem Oberbegriff des Anspruches 1. bekannt. Bei dem dort offenbarten Getriebe ist ein Sonnenrad einer Planetenstufe formschlüssig mit einer Bremsscheibe einer Bremse gekoppelt. Die Bremse umfasst einen Bremskolben als Aktuator. Der Bremskolben ist über eine Hydraulik ansteuerbar, wobei die als Haltebremse ausgebildete Bremsvorrichtung bei Druckbeaufschlagung gelöst wird. Eine standfeste Betriebsbremse ist insbesondere vor dem Hintergrund zunehmend größer werdenden Fahrzeugmassen von landwirtschaftlichen Fahrzeugen und bei deren Fahrzeuggeschwindigkeiten von bis zu 60 km/h nicht möglich.

Es ist daher Aufgabe der vorliegenden Erfindung, bei einem gattungsgemäßen Gegenstand eine Bremsvorrichtung zu verbessern.

Die Aufgabe wird dahingehend gelöst, dass ein gattungsgemäßes Getriebe dergestalt eine Bremsvorrichtung zwischen Planetenträgern und dem als Hohlrad ausgebildeten Abtriebselement aufweist, dass das Abtriebselement über die Bremsvorrichtung mit dem Planetenträger koppelbar ist. Ein zwischen Planetenträger und Hohlrad angeordnete Bremsvorrichtung kann ausreichend groß bauen, um die in der Bremseinrichtung für einen Bremsvorgang aufgrund hoher Massen und Geschwindigkeiten entstehenden Energien aufzunehmen. Die Position der Bremseinrichtung zwischen Planetenträger und Hohlrad und die Übersetzungsverhältnisse bzw. relativen Umdrehungszahlen von Planetenträger und Hohlrad führen zu vorteilhaften Auslegungen der Bremse bzw. Bremseinrichtung. Durch die im Vergleich zum Stand der Technik und bezüglich einer Drehachse einer Antriebswelle nach außen verlagerte Bremseinrichtung kann diese größer bauen und entsprechend ausreichend auch als Betriebsbremse dimensioniert werden. Gleichzeitig sind die in der Bremseinrichtung anfallenden Umfangsgeschwindigkeiten aufgrund der bereits vorhandenen Übersetzung reduziert. Es versteht sich, dass die Bremsvorrichtung je nach Ausbildung der Erfindung sowohl als Halte- oder Betriebsbremse wie auch gegebenenfalls in einer weiteren Variante als Halte- und Betriebsbremse ausgebildet sein kann. Halte- oder Betriebsbremse werden nachfolgend der Einfachheit halber mitunter auch als "Bremse" bezeichnet.

Es versteht sich weiterhin, dass die Anordnung zwischen Planetenträger und Abtriebselement eine "antriebsmäßige" Anordnung zwischen Planetenträger und Abtriebselement darstellt. Durch diese Anordnung wird ein direkter Kraftfluss zwischen Planetenträger und Abtriebselement ermöglicht, unabhängig davon, ob die Bremseinrichtung oder zumindest deren die Energie aufnehmenden Teile tatsächlich örtlich zwischen Planetenträger und Abtriebselement angeordnet ist. Umfasst ist allerdings auch eine räumliche Anordnung "zwischen" Planetenträger und Abtriebselement, wobei es sich alternativ oder ergänzend bei einer Anordnung zwischen Planetenträger und Abtriebselement auch um eine Anordnung teilweise neben einem Planetenträger und/oder dem Abtriebselement handeln kann. Gemeinsam ist sämtlichen erfindungsgemäßen Anordnungen, dass die Bremsvorrichtung zum Bremsen und/oder Sichern das Hohlrad gegen den Planetenträger koppelt.

Die Haltebremse ist insbesondere dergestalt ausgebildet, dass sie in einer Stellung, in der ein zugehöriges Betätigungselement in einer Ausgangsstellung oder Drucklosstellung angeordnet ist, die Bremse betätigt. Bei Ausfall der zur Ansteuerung der Bremse vorgesehenen Systeme erfolgt somit eine Bremsung. Hierfür ist das Betätigungselement in der Ausgangsstellung kraftbeaufschlagt.

Vorzugsweise umfasst die Bremsvorrichtung eine Lamellenbremse, deren Innenlamellen drehfest an dem Planetenträger und deren Außenlamellen drehfest an dem Abtriebselement angeordnet sind.

In Kombination mit der vor- oder nachbeschriebenen Positionierung der Lamellen dicht an einem Hohlrad kann das dortige Lamellenpaket besonders effizient die während eines Betriebsbremsvorganges, d. h. eines Bremsens des bewegten Gefährts eine ausreichend große Menge Energie aufnehmen. Die Wärmeenergie kann über eine Ölspülung oder über die Anbindung der Bremse an das Hohlrad bzw. an den Planetenträger abgegeben werden.

Eine solche vorteilhafte Wirkung der Bremse wird insbesondere dann erzielt, wenn die Innen- und Außenlamellen einen größeren radialen Abstand von einer Drehachse der Antriebswelle aufweisen als eine Drehachse eines der Planetenräder der Planetenstufe.

Allgemein sind im Rahmen der Erfindung typische und übliche wesentliche Elemente einer Planetenstufe ein Sonnenrad, ein Planetenträger mit zugehörigen Planeten sowie ein Hohlrad zuzüglich jeweiliger Lagerungen. Sofern mehrere Planetenstufen vorhanden sind, ist die Bremsvorrichtung zur Koppelung vorzugsweise des Planetenträgers der aus der Antriebsrichtung betrachtet ersten Planetenstufe mit dem Hohlrad vorgesehen, was einen guten Kompromiss darstellt zwischen der Funktion einer Haltebremse und einer Betriebsbremse. Die Bremsvorrichtung kann ansonsten auch zwischen dem Planetenträger der zweiten oder einer weiteren Planetenstufe und dem Abtriebselement angeordnet werden. Bei Varianten, in denen sowohl die Planeten der ersten als auch der zweiten Planetenstufe gemeinsam ein Drehmoment auf das Hohlrad übertragen, ist die Bremsvorrichtung vorzugsweise zwischen besagtem ersten Planetenträger und dem Hohlrad angeordnet. Das dort vorhandene günstige Übersetzungsverhältnis ermöglicht bei Ausnutzung des vorhandenen Bauraums die Auslegung einer Lamellenbremse mit äußerst hoher Leistungsdichte, was wiederum die Kosten senkt.

Vorteilhafterweise ist zumindest einer der Lamellenträger mit wenigstens einem Ölspülkanal versehen, durch den der Ölstand während des Betriebes ausreichend niedrig gehalten werden kann und der für eine gute Wärmeabfuhr sorgt. Dies ist insbesondere für Varianten des Getriebes mit einer Ölumlaufschmierung vorteilhaft, wobei die Betriebsfähigkeit der Bremse nicht beeinträchtigt wird.

Der Ölspülkanal des zumindest einen, vorzugsweise bzgl. einer Drehachse äußeren Lamellenträgers, verläuft in etwa senkrecht zur Erstreckung der Reiboberflächen.

Im Betrieb ergibt sich eine Ölschmierung zu einem Ölring, der bei einer beispielhaften Ausbildung der Erfindung für ein landwirtschaftliches Fahrzeug bezüglich einer äußeren Innenoberfläche des Gehäuses bzw. des Hohlrads des Getriebes einen Ölstand von wenigen Zentimetern aufweist. Entsprechend findet sich entfernt von der zentralen Drehachse einer Antriebswelle ein Überlauf zwischen Getriebeflansch und Hohlrad. Bzgl. der Planetenträger ist dieser Überlauf weiter von der Drehachse einer Eingangs- und Antriebswelle des Getriebes entfernt. Der Überlauf ist insbesondere bei dem vorstehenden Ausführungsbeispiel der Erfindung in etwa, d. h. bis auf wenige (=maximal bis zu zehn) Zentimeter auf einer Höhe mit dem Ölspülkanal des zumindest äußeren Lamellenträgers.

Das Getriebe weist vorzugsweise einen Ölüberlauf auf, der bzgl. des vorzugsweise äußeren Lamellenträgers und somit bezogen auf die Position des Lamellenträgers am anderen Ende des Hohlrades insbesondere auf Höhe der (Innen- und/oder Aupen-) Lamellen angeordnet ist, während ein Ölzulauf antriebswellennah, d.h. dichter an der Drehachse einer Antriebswelle als der Überlauf angeordnet ist. Antriebswellennah bedeutet insbesondere, dass der Ölzulauf maximal 10 cm von einer Drehachse der Antriebswelle entfernt ist.

Vorzugsweise handelt es sich bei der Antriebswelle um eine Zentralwelle, die drehfest mit einem Sonnenrad des Getriebes verbunden ist.

In der Betriebsposition des Getriebes bzw. Antriebsstranges ist der Lamellenträger bezüglich einer Längsmittelachse des Getriebes, die einer Drehachse der Antriebswelle entspricht, an einem Ende des Hohlrades angeordnet. Am anderen Ende des Hohlrades bezogen auf die Drehachse, insbesondere zu einem Getriebeflansch hin, über den das Getriebe mit einem Fahrzeug oder Maschinenrahmen verbunden werden kann, ist ein Ablauf oder Überlauf für das Öl angeordnet, sodass ausgehend von einer zentralen Schmierung und einem Transport des Öls über die erste Planetenstufe und den Lamellenträger hin zu etwaige vorhandenen weiteren Planetenstufen eine Schmierung der Planetenstufe(n) ermöglicht ist. Insbesondere erfolgt die ÖIdurchführung von einer Motorseite des Getriebes her entweder durch die zentrale Antriebswelle oder an dieser entlang in Richtung der vorzugsweise auf einer Außenseite der zugehörigen Maschine befindlichen Seite des Getriebes.

Neben einem für den Betrieb vorgesehenen Überlauf befindet sich oftmals ein weiterer Überlauf, der den Ölstand während des Stillstands des Getriebes definiert. Vorzugsweise befindet sich dieser in einer Betriebsstellung des Getriebes drehachsennäher als der für den Betrieb vorgesehene Überlauf, sodass das während des Betriebes im Getriebe umgewälzte Öl sich im Ruhezustand auf einen Maximalpegel reduziert, falls zu viel Öl im Getriebe sein sollte.

Die Bremsvorrichtung ist insbesondere hydraulisch betätigbar. Zur Betätigung eines Betätigungselements der Bremsvorrichtung, insbesondere mittels einer Druckbeaufschlagung, umfasst diese vorteilhafterweise eine zentral durch die Antriebswelle verlaufende Bremsleitung, sodass auf eine von außen angeschlossene Bremsleitung, die insbesondere bei grobe Arbeit verrichtenden Schwerlastmaschinen leicht beschädigt werden kann, verzichtet werden kann. Alternativ kann die Bremsvorrichtung auch mittels einer von außen angeschlossenen Bremsleitung, was zu einem einfacher aufbauenden Getriebe führt, versorgt bzw. betätigt werden.

In einer Variante, in der die Bremsvorrichtung mittels ihrer zentral durch die Antriebswelle verlaufenden Bremsleitung druckbeaufschlagt wird, weist das erfindungsgemäße Getriebe in einer vorteilhaften Ausführung einen zwischen Bremsleitung und Betätigungselement angeordneten Adapter zur Ausbildung einer Drehdurchführung auf. Dieser ist am betätigungselementseitigen Ende mit einem größeren Durchmesser versehen als an seinem antriebswellenseitigen Ende. Hierdurch wird eine Axialkraft in Richtung der Antriebswelle erzeugt, sodass der Adapter in seiner Lage gesichert wird. Vorzugsweise ist auf Seiten der Antriebswelle der Adapter mit einer O-Ringdichtung in der Antriebswelle gesichert, während auf der langsam drehenden Seite des Bremsbetätigungselementes eine Rotationsdichtung verwendet wird.

In axialer Richtung ist die Länge des Adapters vorzugsweise mindestens doppelt so groß wie dessen maximale Erstreckung in Querrichtung dazu. Insbesondere ist der Adapter mindestens viermal so lang wie er in Querrichtung breit ist. Es ergibt sich ein geringer Winkelfehler bei radialen Verlagerungen, sodass ein sehr kleiner Spalt zwischen Adapter und Betätigungselement gewählt werden kann. Hieraus ergibt sich eine größere Standzeit der Dichtung, wobei bei Drücken von vorzugsweise bis zu 30 bar und hohen Drehzahlen von bis zu 8000 Umdrehungen pro Minute nach wie vor akzeptable pv-Werte erhalten werden. Somit ergibt sich eine vorteilhafte Betätigung bzw. Verlegung der Bremsleitung durch die Antriebswelle hindurch.

Insbesondere ist ein erfindungsgemäßes Getriebe gemäß einer weiteren Ausbildung mit einem Hohlrad versehen, welches eine stirnseitige Abdeckung insbesondere in Form eines Deckels aufweist. Insbesondere stützt sich innenseitig auf der Abdeckung ein insbesondere federartiges Stellelement der Bremsvorrichtung ab, welches vorzugsweise als Rückstellelement ausgebildet ist. Bei dem Rückstellelement bzw. Stellelement kann es sich beispielsweise um eine Tellerfeder handeln, die rotationssymmetrisch zur Drehachse angeordnet ist. In einer Ausbildung mit einem lösbar am Hohlrad festgelegten Deckel, der beispielsweise mit dem Hohlrad verschraubt ist, wölbt sich diese Abdeckung zu ihrer Mitte hin nach außen, d. h. in einer Betriebsposition an einem Fahrzeug vorzugsweise von einer vertikal ausgerichteten Fahrzeugmittelebene weg zur Seite hin, um in Kombination mit einer Tellerfeder, die sich drehachsennah weiter zur Eingangsseite des Getriebes hin erstreckt als an ihrem radial äußeren Ende, ausreichend Steifigkeit für die Betätigung der Bremse zu schaffen. Die Abdeckung dreht sich mit dem Hohlrad mit, sodass eine Abstützung des hohlradseitigen Teils einer etwaigen Bremsvorrichtung ohne Weiteres ermöglicht ist.

Insbesondere ist die Abdeckung und sind Teile der Bremsvorrichtung relativ zum Hohlrad drehfest angeordnet, drehe sich also mit diesem mit und nicht relativ zueinander, wobei das Hohlrad auf einem Getriebeflansch gelagert ist, der auf der der Abdeckung entgegengesetzten Seite des Hohlrades in dieses hineinführt. Für Wartungszwecke ist die Bremsvorrichtung somit besonders gut zugänglich.

Vorzugsweise ist das Hohlrad darüber hinaus über ein in Richtung der Abdeckung auf dem Getriebeflansch versetztes Festlager, vorzugsweise in Form eines Rillenkugellagers gelagert, wobei bei mehreren Planetenstufen der Getriebeflansch mit dem Planetenträger der zweiten oder einer weiteren Planetenstufe drehfest verbunden ist.

Ein erfindungsgemäßes Getriebe ist vorzugsweise als zumindest zweistufiges Planetengetriebe mit zumindest einer zweiten Planetenstufe ausgebildet, die von einer Eingangsseite des Getriebes betrachtet, vor der ersten Planetenstufe angeordnet ist. Die Eingangsseite des Getriebes ist die Seite, auf der beispielsweise von einem Elektromotor her eine Antriebsenergie auf die vorzugsweise zentrale Antriebswelle eingespeist wird.

Auch die weiteren Planetenstufen können von der Eingangsseite des Getriebes aus betrachtet vor der ersten Planetenstufe angeordnet sein. Die Bremsvorrichtung kann dann gut zwischen einer Abdeckung des Hohlrades und dem ersten Planetenträger positioniert werden.

Insbesondere ist das Sonnenrad der zweiten und etwaiger weiterer zusätzlicher Planetenstufen jeweils auf einer Hohlwelle angeordnet und insbesondere als Teil dieser Hohlwelle ausgebildet, wobei die Hohlwelle die Antriebswelle umschließt. Dies führt zu einem kompakten Getriebeaufbau, wodurch wiederum ausreichend Platz für die Bremsvorrichtung vorhanden sein kann.

Vorzugsweise ist der Planetenträger der letzten Stufe drehfest mit dem Getriebeflansch verbunden, sodass hierüber die bereits beschriebene Lagerung des Hohlrades erfolgen kann.

Insbesondere in Kombination mit einem Elektro- oder Hydraulikmotor kann das Getriebe als Mehrgangschaltgetriebe, vorzugsweise als Zweigangschaltgetriebe ausgebildet werden, sodass hohe Drehzahlen und entsprechend hohe Geschwindigkeiten mit einem zugehörigen Antriebsstrang bzw. Fahrzeug erreicht werden können. In Kombination mit einem Elektromotor, der ebenfalls teilweise als Betriebsbremse arbeiten kann, ist die erfindungsgemäße Bremsvorrichtung besonders vorteilhaft.

Die eingangs gestellte Aufgabe wird auch durch einen Antriebsstrang umfassend einen als Hydro- oder Elektromotor ausgebildeten Motor gelöst, wobei der Antriebsstrang ein vor- oder nachbeschriebenes Getriebe umfasst.

Eine besonders kompakte Ausbildung des Antriebsstranges wird dann erreicht, wenn ein Getriebeflansch an dem Gehäuse des Motors angeordnet und insbesondere einstückig mit diesem ausgebildet ist.

Schließlich wird die eingangs gestellte Aufgabe auch noch durch ein landwirtschaftliches oder Schwerlast-Fahrzeug gelöst, welches wenigstens einen und insbesondere zumindest zwei, vorzugsweise zumindest 4 Antriebsstränge wie vorbeschrieben oder wie nachbeschrieben aufweist. Ein solches Fahrzeug kann als Rad-, Ketten- und/oder Raupenfahrzeug ausgebildet werden mit einem zulässigen Gesamtgewicht von vorzugsweise bis zu 35 oder bis zu 40 Tonnen. Es kann sich auch um ackergängiges oder ein Schienenfahrzeug handeln.

Weitere Einzelheiten der Erfindung sind dennoch folgenden Figurenbeschreibungen zu entnehmen. In den schematischen Abbildungen der Figuren zeigt:
- Fig. 1: einen erfindungsgemäßen Antiebsstrang in einer perspektivischen Darstellung,
- Fig. 2: eine teilweise aufgebrochene Ansicht des erfindungsgemäßen Antriebsstrangs,
- Fig. 3: einen Teil eines erfindungsgemäßen Fahrzeuges,
- Fig. 4: einen Teil eines weiteren erfindungsgemäßen Fahrzeuges.

Einzelne technische Merkmale der nachbeschriebenen Ausführungsbeispiele können auch in Kombination mit vorbeschriebenen Ausführungsbeispielen sowie den Merkmalen der unabhängigen Ansprüche und etwaiger weiterer Ansprüche zu erfindungsgemäßen Gegenständen kombiniert werden. Sofern sinnvoll, werden funktional gleichwirkende Elemente mit identischen Bezugsziffern versehen.

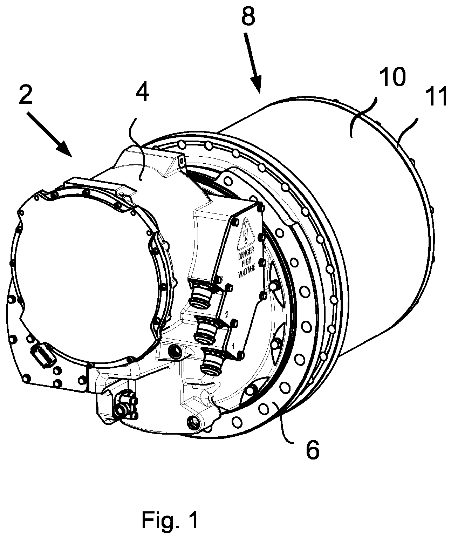

Ein erfindungsgemäßer Antriebsstrang weist in einem ersten Ausführungsbeispiel einen Elektromotor 2 auf, der mit seinem Gehäuse 4 mit einem Getriebeflansch 6 verbunden ist. Dieser ist Teil eines Getriebes 8, welches ein als Hohlrad 10 ausgebildetes Abtriebselement aufweist (Fig. 1). Stirnseitig umfasst das Abtriebselement eine Abdeckung in Form eines Deckels 11, welcher drehfest mit dem Hohlrad 10 verbunden ist.

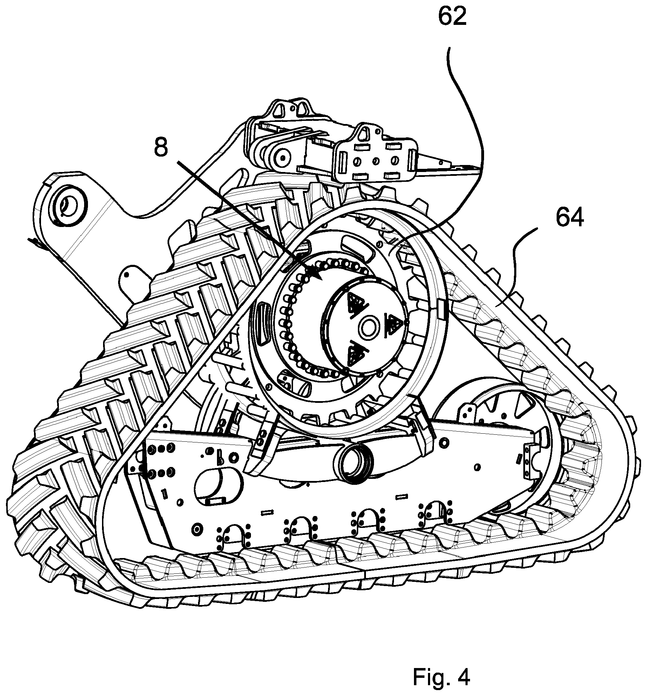

Der vorliegende Antriebsflansch kann beispielsweise in einer Konstruktion gemäß Fig. 4 eingesetzt werden und somit Teil eines Raupenfahrzeuges sein.

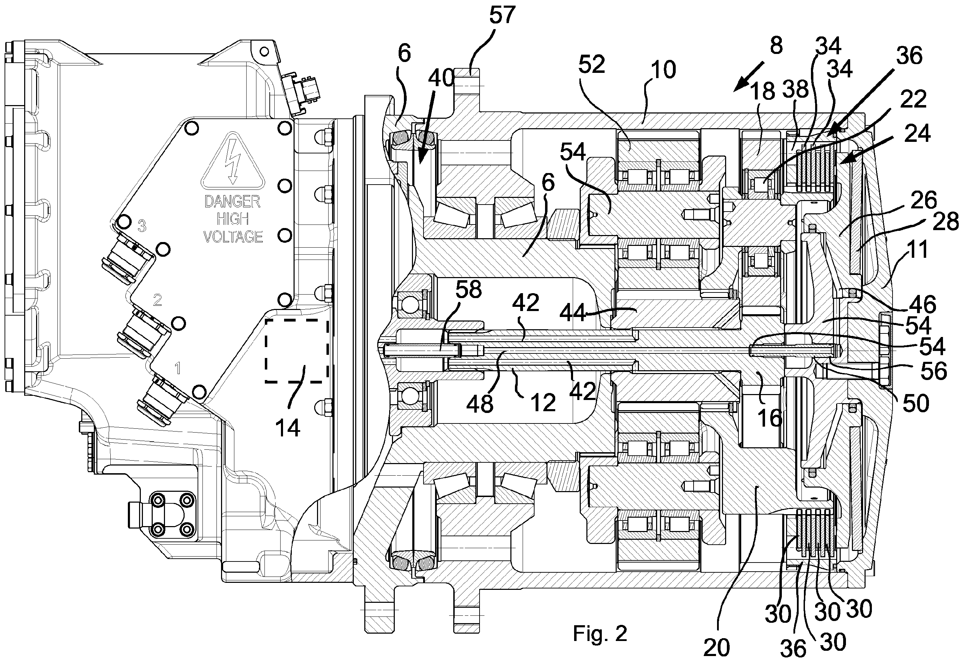

Das erfindungsgemäße Getriebe 8 ist vorliegend als Zweigangschaltgetriebe ausgebildet, wobei eine einer Antriebswelle 12 vorgeschaltete Schaltung 14 lediglich als gestricheltes Kästchen dargestellt ist. Dieses Kästchen befindet sich auf der Eingangsseite des Getriebes 8. Vorliegend ist das Schaltgetriebe als zweistufiges Planetengetriebe ausgebildet. Das Sonnenrad 16 kämmt mit Planetenrädern 18 der ersten Planetenstufe. Die Planetenräder 18 sind auf einem Planetenträger 20 mittels Lagern 22 abgestützt (Fig. 2).

Die Bremsvorrichtung ist nun mit einem Lamellensatz 24 dergestalt zwischen Planetenträger 20 und Hohlrad 10 angeordnet, dass das Abtriebselement (Hohlrad 10) mit dem Planetenträger 20 koppelbar ist. Vorliegend ist die Bremse als Betriebs- und als Haltebremse ausgebildet. In der in der Abbildung dargestellten Position ist ein Betätigungselement 26 mittels eines Rückstellelementes 28 axial in Richtung der Antriebs- und Eingangsseite des Getriebes, mithin in der Zeichnungsansicht nach links, kraftbeaufschlagt, sodass bei einer Drucklosstellung der Bremsvorrichtung das Planetengetriebe durch die Kopplung des Planetenträgers 20 mit dem Hohlrad 10 blockiert bzw. gehemmt ist. Innenlamellen 30 sind hierfür auf einem Lamellenträger angeordnet, der durch den Planetenträger 20 ausgebildet wird, während Außenlamellen 34 auf einem Lamellenträger 36 angeordnet sind. Letzterer weist einen Ölspülkanal 38 auf, durch den während des Betriebes im Bereich der Lamellen befindliches Öl abgeleitet werden kann.

Ein Bereich 40 bildet einen Überlauf für das Öl im Bereich zwischen einem Flansch (6) des Getriebes und dem Hohlrad 10 aus.

Versorgt wird das Getriebe über Ölkanäle 42, die in der Antriebswelle 12 sowie einem Sonnenrad 44 der zweiten Planetenstufe enthalten sind. Dieses Sonnenrad 44 ist drehfest mit dem Planetenträger 20 der ersten Planetenstufe verbunden. Der Ölzulauf erfolgt somit antriebswellennah.

Die Bremsvorrichtung mit den Lamellen 30 und 34 muss im Fall einer Notbremsung eines im Betriebsfall vorhandenen Fahrzeuges nahezu die gesamte kinetische Energie desselben aufnehmen. Diese Energie wird von dem Material der Lamellenbremse aufgenommen, da während der vergleichsweise kurzen Zeitspanne der Notbremsung die Ölmenge, die an den Lamellen vorbei strömt, sehr gering ist. Durch die hohlradnahe Anordnung des Lamellenpaketes, umfassend die Innenlamellen 30 und die Außenlamellen 34, kann eine vergleichsweise große Masse an Material für das Lamellenpaket verwendet werden. Vorzugsweise liegt die Masse des Lamellenpaketes bei einem Ausführungsbeispiel der Erfindung, welches insbesondere für einen Einsatz in einem Fahrzeug für Ackerbetrieb vorgesehen ist, bei 8 bis 10 kg.

Die Differenz der Drehzahlen des Planetenträgers 20 im Vergleich zur Drehzahl des Hohlrades 10 liegt im Bereich von vorzugsweise 800 bis 1300 Umdrehungen pro Minute. Beispielhaft können bei maximalen Durchmessern des Lamellenpaketes von (außenseitig) 40 cm bei vier Innen- und vier Außenlamellen ausreichend große kinetische Energien aufgenommen werden, die von Fahrzeugen herrühren, die mit Geschwindigkeiten von bis zu 40 km/h und einem Gewicht von bis zu 40 t mindestens ein erfindungsgemäßes Getriebe, vorzugsweise zwei oder vier erfindungsgemäße Getriebe und zugehörige Antriebsstränge aufweisen.

Die Betätigung der Bremsvorrichtung erfolgt über die Druckbeaufschlagung einer Druckkammer 46. Der Druck wird über eine Bremsleitung 48, die in der Antriebswelle 12 enthalten ist, bereitgestellt. Die Bremsleitung 48 wird mittels eines Adapters 50, der eine Drehdurchführung ausbildet, fortgeführt. Gegenüber der Antriebswelle 12 ist der Adapter 50 mit einer O-Ringdichtung 52 abgedichtet. Der Adapter dreht sich somit relativ zum Bremszylinderteil 54 und ist diesem gegenüber mittels einer Kolbenringdichtung 56, befindlich in einer entsprechenden Aussparung des Adapters 50 angeordnet.

Auf der Eingangsseite der Antriebswelle 12 befindet sich nicht weiter dargestellt eine Vorrichtung zur Druckbeaufschlagung der Bremsleitung und damit zur Betätigung der Bremse.

Ausgehend von dem Sonnenrad 44 der zweiten Planetenstufe werden deren Planetenräder 52 angetrieben, diese kämmen ebenfalls wiederum mit dem Hohlrad 10. Ein Planetenträger 54 der zweiten Planetenstufe ist mit dem Getriebeflansch 6 drehfest verbunden.

Das als Abtriebselement vorgesehene Hohlrad 10 weist einen flanschartigen Anbindungsbereich 57 auf, über die beispielsweise eine Raupenkette antreibbar ist. Bezüglich einer Drehachse 58 verläuft eine Senkrechte zu dieser durch diesen Anbindungsbereich 57 sowie ebenfalls durch eine Lagerung des Hohlrades 10, sodass die über den Anbindungsbereich 57 insbesondere im Fall einer Notbremsung angreifenden Kräfte gut abgefangen werden.

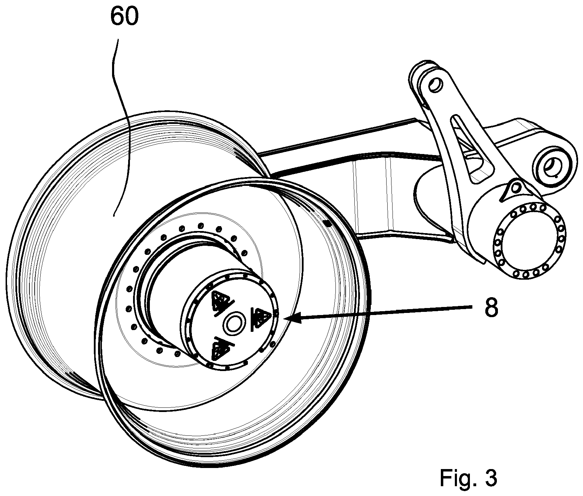

Das erfindungsgemäße Getriebe kann Teil eines Antriebsstranges für ein Radfahrzeug sein, welches einen Radträger 60 aufweist, welcher über das Hohlrad angetrieben wird (Fig. 3). Alternativ kann in einer besonders bevorzugten Ausführungsform das Getriebe zum Antrieb eines Antriebsrades 62 dienen, welches ein Antriebselement in Form eine Gummiraupe 64 (alternativ auch Kette) antreibt. Ein solcher, in Fig. 4 dargestellter Antriebsstrang kann beispielsweise mit drei im Prinzip identisch aufgebauten weiteren Antriebssträngen zum Antrieb eines insbesondere in der Landwirtschaft verwendeten Raupenfahrzeuges vorgesehen sein.

## Patentansprüche

1. Getriebe für einen Antriebsstrang für ein landwirtschaftliches oder Schwerlast-Fahrzeug, mit einer zentralen Antriebswelle (12), mit zumindest einer Planetenstufe umfassend einen Planetenträger (20), mit zumindest einem Abtriebselement und mit einer Bremseinrichtung, wobei die Antriebswelle über die Planetenstufe mit dem Abtriebselement verbunden ist, **dadurch gekennzeichnet, dass** die Bremseinrichtung dergestalt zwischen Planetenträger (20) und dem als Hohlrad (10) ausgebildeten Abtriebselement angeordnet ist, dass das Abtriebselement über die Bremseinrichtung mit dem Planetenträger (20) koppelbar ist.

2. Getriebe nach Anspruch 1, **dadurch gekennzeichnet, dass** die Bremseinrichtung als Halte- und/oder Betriebsbremse ausgebildet ist.

3. Getriebe nach Anspruch 1 oder 2, **dadurch gekennzeichnet, dass** die Bremseinrichtung eine Lamellenbremse aufweist, deren Innenlamellen (30) drehfest an dem Planetenträger (20) und deren Außenlamellen (34) drehfest an dem Abtriebselement angeordnet sind.

4. Getriebe nach Anspruch 3, **dadurch gekennzeichnet**, die Innen- und Außenlamellen (30, 34) einen größeren radialen Abstand von einer Drehachse (58) der Antriebswelle (12) aufweisen als eine Drehachse eines der Planetenräder (18) der Planentenstufe.

5. Getriebe nach Anspruch 3 oder 4, **dadurch gekennzeichnet, dass** zumindest einer der Lamellenträger (36) wenigstens einen Ölspülkanal (38) aufweist.

6. Getriebe nach Anspruch 5, **dadurch gekennzeichnet, dass** am bzgl. des Lamellenträgers (36) anderen Ende des Hohlrades (10) insbesondere auf Höhe der Innen- und/oder Außenlamellen (30, 34) ein Ölüberlauf angeordnet ist, während ein Ölzulauf antriebswellennah angeordnet ist.

7. Getriebe nach einem der vorherigen Ansprüche, **dadurch gekennzeichnet, dass** die insbesondere hydraulisch betätigbare Bremsvorrichtung zur Betätigung, insbesondere Druckbeaufschlagung, eines Betätigungselements (26) der Bremsvorrichtung eine zentral durch die Antriebswelle (12) verlaufende oder von außen angeschlossene Bremsleitung (48) umfasst.

8. Getriebe nach Anspruch 7, **dadurch gekennzeichnet, dass** zwischen Bremsleitung und Betätigungselement ein Adapter (50) zur Ausbildung einer Drehdurchführung angeordnet ist, der am betätigungselementseitigen Ende einen größeren Durchmesser aufweist als am antriebswellenseitigen Ende.

9. Getriebe nach einem der vorherigen Ansprüche, **dadurch gekennzeichnet, dass** das Hohlrad (10) eine stirnseitige Abdeckung (11) insbesondere in Form eines Deckels aufweist, vorzugsweise auf der sich innenseitig ein insbesondere federartiges Stellelement der Bremseinrichtung, welches insbesondere als Rückstellelement (28) ausgebildet ist, abstützt.

10. Getriebe nach einem der vorherigen Ansprüche, **dadurch gekennzeichnet, dass** die Abdeckung (11) und Teile der Bremseinrichtung relativ zum Hohlrad (10) drehfest angeordnet sind, wobei das Hohlrad (10) auf einem Getriebeflansch (6) gelagert ist, der auf der der Abdeckung (11) entgegen gesetzten Seite des Hohlrades (10) in dieses hineinführt.

11. Getriebe nach einem der vorherigen Ansprüche, **dadurch gekennzeichnet, dass** es als zumindest zweistufiges Planetengetriebe mit zumindest einer zweiten Planetenstufe ausgebildet ist, die von einer Eingangsseite des Getriebes (8) betrachtet vor der ersten Planetenstufe angeordnet ist.

12. Getriebe nach Anspruch 11, **dadurch gekennzeichnet, dass** das Sonnenrad (44) der zweiten und etwaiger weiterer zusätzlicher Planetenstufen jeweils auf einer Hohlwelle angeordnet ist, welche die Antriebswelle (12) umschließen.

13. Getriebe nach Anspruch 11 oder 12, **dadurch gekennzeichnet, dass** der Planetenträger der letzten Stufe drehfest mit dem Getriebeflansch (6) verbunden ist.

14. Getriebe nach einem der vorherigen Ansprüche, **dadurch gekennzeichnet, dass** das Getriebe (8) als Schaltgetriebe ausgebildet ist.

15. Antriebsstrang umfassend insbesondere einen als Hydromotor oder Elektromotor (2) ausgebildeter Motor und ein Getriebe nach einem der vorherigen Ansprüche.

16. Antriebsstrang nach Anspruch 15, **dadurch gekennzeichnet, dass** ein Getriebeflansch (6) an dem Gehäuse des Motors angeordnet und insbesondere einstückig mit diesem ausgebildet ist.

17. Landwirtschaftliches oder Schwerlast-Fahrzeug, umfassend wenigstens einen und insbesondere zumindest zwei, vorzugsweise zumindest vier Antriebsstränge nach Anspruch 15 oder 16.
